# EUROPÄISCHE PATENTSCHRIFT

(11) **EP 4 087 820 B1**
(45) Veröffentlichungstag und Bekanntmachung des Hinweises auf die Patenterteilung: **28.02.2024**
(21) Anmeldenummer: 20845392.8
(22) Anmeldetag: 21.12.2020
(51) Int. Cl.: C01B 21/26, C01B 21/28, C01B 21/38

(54) **VERFAHREN UND ANLAGE ZUR HERSTELLUNG VON SALPETERSÄURE**
PROCESS AND PLANT FOR PREPARING NITRIC ACID
PROCÉDÉ ET INSTALLATION DE PRODUCTION D'ACIDE NITRIQUE

(30) Priorität: 10.01.2020 DE 102020200235
(43) Veröffentlichungstag der Anmeldung: 16.11.2022
(73) Patentinhaber: thyssenkrupp Uhde GmbH, 44141 Dortmund (DE); thyssenkrupp AG, 45143 Essen (DE)
(72) Erfinder: KERN, Paul, 44147 Dortmund (DE)
(74) Vertreter: thyssenkrupp Intellectual Property GmbH
(86) Internationale Anmeldenummer: PCT/EP2020/087544
(87) Internationale Veröffentlichungsnummer: WO 2021/140023

(56) Entgegenhaltungen:
- WO-A1-01/68520
- WO-A1-2018/162150
- DE-A1-102005 023 161

## Beschreibung

Die vorliegende Erfindung betrifft ein Verfahren zur Herstellung von Salpetersäure nach dem Ostwald-Verfahren, umfassend die Umsetzung von Ammoniak mit Luftsauerstoff (Primärluft) zu einem NOx-haltigen Gasstrom in einem Ammoniakoxidationsreaktor bei einem ersten Druck und die Absorption des NOx-haltigen Gasstroms in Wasser in einer Absorptionsvorrichtung bei einem zweiten Druck, welcher höher ist als der erste Druck, wobei das Verfahren einen Schritt umfasst, in dem ein Bleichen der Salpetersäure mit Bleichluft (Sekundärluft) vorgesehen ist, wobei das Bleichen etwa auf dem Druckniveau des ersten Drucks erfolgt.

### Stand der Technik

Aus der WO 2018/162150 A1 sind ein Verfahren und eine Anlage zur Herstellung von Salpetersäure bekannt, bei denen in einem Reaktor bei einem ersten Druck die Oxidation von Ammoniak zu Stickstoffoxiden (NOx) erfolgt, welche anschließend in einem Absorptionsturm mit Wasser zu roher Salpetersäure umgesetzt werden, wobei der Absorptionsturm bei einem höheren Druck arbeitet als der Reaktor und ein NOx-Kompressor den Druck der aus dem Reaktor ausströmenden Gase auf den höheren Absorptionsdruck erhöht. Anlagen dieses Typs werden daher auch als Zwei-Druck-Anlagen bezeichnet.

In der WO 2018/162150 A1 werden zwei unterschiedliche Konzepte für Anlagen zur Herstellung von Salpetersäure beschrieben. Bei dem ersten Konzept wird Luft mittels eines Luftkompressors auf den Reaktionsdruck gebracht, wobei der komprimierte Luftstrom aufgeteilt wird und ein erster Teilstrom zum Bleichen der Salpetersäure in einem Bleichturm verwendet wird, während der zweite Teilstrom der Luft dem Ammoniakoxidationsreaktor zugeführt wird. Hier erfolgt somit der Bleichvorgang bei dem niedrigeren Druck und somit bei dem gleichen Druck wie die Oxidation des Ammoniaks. Die Anlage umfasst einen Luftkompressor, einen NOx-Kompressor und eine Restgasturbine, die alle drei auf einer Welle angeordnet sind. Es handelt sich um die Beschreibung einer herkömmlichen Produktionsanlage nach dem Zweidruckverfahren (Stand der Technik).

Bei herkömmlichen Salpetersäureanlagen nach dem Zweidruckverfahren, die mit nur einem Luftkompressor arbeiten, der sowohl für die Erzeugung der Primärluft für die Ammoniakoxidation als auch für die Erzeugung der Sekundärluft für den Bleichvorgang dient, so dass der Luftstrom stromabwärts des Luftkompressors aufgeteilt wird, ist die Leistung des Luftkompressors häufig ein Faktor, der die Kapazität einer solchen Zweidruckanlage begrenzt, so dass man von einem "bottleneck" spricht. Wenn man hier zur Ergänzung einen zusätzlichen Sekundärluftkompressor für die Bleichluft verwendet, wird jedoch die Möglichkeit einer Erhöhung der Kapazität der Anlage durch die Kapazität des NOx-Kompressors stark begrenzt, da der Austrittsstrom der Niederdruckbleichung (zur Rückgewinnung von NOx) zwischen Luft- und NOx-Kompressor der Hauptmaschine rückeingespeist werden muss. Luftkompressor und NOx-Kompressor sind im Regelfall aufeinander abgestimmt. Bei einem Revamp müsste daher die gesamte Kompressoranordnung einschließlich des Hauptluftkompressors und des NOx-Kompressors angepasst werden, was in der Regel kostspielig ist. Außerdem sehen die Betreiber dieser Anlagen Modifikationen im Bereich der Kompressoranordnung (so genannte Hauptmaschine), auf deren Welle zumeist auch die Dampfturbine und die Restgasturbine angeordnet sind, als riskant an.

In Figur 2 der WO 2018/162150 A1 wird ein alternatives Konzept vorgestellt, bei dem ein zusätzlicher Kompressorfür Bleichluft vorgesehen ist, mittels dessen ein separat eingespeister Luftstrom auf einen höheren Druck komprimiert wird, nämlich den zweiten Druck, bei dem der Absorptionsturm arbeitet. Die Salpetersäure wird zunächst in einem ersten Bleichturm bei dem höheren Druck gebleicht, welchem ein zweiter Bleichturm nachgeschaltet ist, der bei einem niedrigeren Druck arbeitet, wobei zwischen beiden Bleichtürmen ein Ventil angeordneten ist, um den Produktgasstrom auf den niedrigeren ersten Druck zu entspannen. Der zweite Bleichturm wird mit Bleichluft gespeist, welche von einem ersten Luftkompressor komprimiert wird, der auch die Luft für den Ammoniakoxidationsreaktor zur Verfügung stellt und in einem Teilstrom von dieser Primärluft abgezweigt wird. Hier sind somit insgesamt drei Kompressoren vorhanden, nämlich der NOx-Kompressor, der Primärluftkompressor und der zweite Luftkompressor für die Bleichluft, der auf ein höheres Druckniveau komprimiert und nicht auf der gleichen Welle angeordnet ist wie die beiden anderen Kompressoren. Zwar besteht hier der Vorteil, dass der Betriebspunkt des Hauptluftkompressors für die Primärluft kaum verändert wird, aber die Kosten für den zusätzlichen Sekundärluftkompressor (für die Bleichluft) sind vergleichsweise hoch, weil dieser Kompressor auf einem höheren Druck arbeitet und das gesamte Bleichsystem der Anlage ersetzt werden muss. Ein Umbau der Anlage bei einem "Revamp" ist aufwändig, da neue Säurepumpen verwendet und die Produktleitungen geändert werden müssen. Außerdem ist die Aufreinigung der rohen Salpetersäure, also das Bleichen bei einem höheren Druck schwieriger und weniger effektiv.

Ein wesentlicher Nachteil des beschriebenen Verfahrens besteht daher darin, dass aus diesem Grund nicht die gesamte Kapazität der Hauptmaschine zur Verbrennung von Ammoniak bzw. zur Erzeugung von Salpetersäure bereitgestellt werden kann, sondern weiterhin ein signifikanter Anteil der Luft zum Niederdruck-Bleichturm geführt werden muss.

Weiterhin sind aus dem Stand der Technik so genannte Eindruckverfahren zur Herstellung von Salpetersäure bekannt, bei denen zwei Luftkompressoren hintereinander geschaltet sind, mittels derer sowohl die Primärluft für die Ammoniakoxidation als auch die Sekundärluft für den Bleichprozess erzeugt wird, wobei stromabwärts des zweiten Luftkompressors der Luftstrom aufgeteilt wird in Bleichluft und Primärluft. Beispielsweise beschreibt die CN 108946687 A ein solches Eindruckverfahren, bei dem die Absorption der NOx-Gase im Absorptionsturm bei dem gleichen Druck erfolgt, bei dem auch die Ammoniakoxidation stattfindet, so dass stromabwärts des Ammoniakoxidationsreaktors kein NOx-Kompressor vorhanden ist. Mittels einer solchen Anlage lässt sich jedoch nur eine verdünnte Salpetersäure herstellen.

Die Aufgabe der vorliegenden Erfindung besteht darin, ein verbessertes Zweidruckverfahren zur Herstellung von Salpetersäure mit den eingangs genannten Merkmalen zur Verfügung zu stellen, bei dem die durch die Kompressoren vorgegebenen Einschränkungen hinsichtlich der Kapazität der Anlage überwunden werden und eine Erhöhung der Kapazität der Anlage mit geringeren Investitionen ermöglicht wird.

Die Lösung der vorgenannten Aufgabe liefert ein Verfahren zur Herstellung von Salpetersäure der eingangs genannten Art mit den Merkmalen des Anspruchs 1.

Erfindungsgemäß wird die Sekundärluft über mindestens einen separaten Kompressor auf den Betriebsdruck des Bleichvorgangs gebracht, wobei dieser separate Kompressor unabhängig ist von dem Kompressor mittels dessen die Primärluft auf den ersten Druck der Ammoniakoxidationsreaktion gebracht wird.

Anders als bei dem aus der WO 2018/162150 A1 bekannten Verfahren erfolgt erfindungsgemäß das Bleichen mittels eines zweiten Sekundärluftkompressors, welcher unabhängig von dem Primärluftkompressor (Hauptluftkompressor) ist, welcher aber die Sekundärluft für den Bleichvorgang nur auf den ersten niedrigeren Druck verdichtet, bei dem auch der Ammoniakoxidationsreaktor arbeitet. Eine Druckerhöhung auf den zweiten höheren Druck, bei dem die Absorption der NOx-Gase in der Absorptionsvorrichtung erfolgt, ist somit bei dem erfindungsgemäßen Verfahren erst stromabwärts des Bleichvorgangs vorgesehen. Der NOx-Kompressor der Hauptmaschine, der weiterhin auf der Welle des Primärluftkompressors angeordnet sein kann, wird bei diesem Verfahrenskonzept nicht belastet.

Das Sekundärluftsystem der Anlage muss bei dem erfindungsgemäßen Konzept nicht ersetzt werden, sondern kann wie bisher genutzt werden, weil der Bleichvorgang nicht bei dem erhöhten Druck, sondern bei dem ersten niedrigeren Druck erfolgt. Es müssen keine neuen Säurepumpen verwendet und die Produktleitungen müssen nicht geändert werden. Das bestehende Sekundärluftsystem kann bei dem erfindungsgemäßen Verfahren die Funktion einer Zwischenkühlung übernehmen. Bei einem Revamp einer bestehenden Salpetersäureanlage, um deren Kapazität zu erhöhen, werden bei dem erfindungsgemäßen Konzept Änderungen an der Hauptmaschine (d.h. dem die Kompressoren und Turbinen umfassenden Anlagenbereich) vermieden. Der NOx-Kompressor der Hauptmaschine wird nicht belastet.

Nachfolgend sollen einige hierin verwendete Begriffe zum besseren Verständnis der vorliegenden Beschreibung der Erfindung noch einmal erläutert werden.

Als "Primärluft" wird diejenige Luft bezeichnet, die dem Ammoniakoxidationsreaktor zugeführt wird, um darin das diesem ebenfalls zugeführte Ammoniak zu Stickstoffoxiden zu oxidieren.

Der Ausdruck "Stickstoffoxide" wird für die bei der Oxidationsreaktion von Ammoniak entstehenden Oxide der verschiedenen Oxidationsstufen verwendet, nämlich Stickstoffmonoxid (NO), Stickstoffdioxid (NO₂), Distickstofftetroxid (N₂O₄) und Distickstoffmonoxid (N₂O), wobei bei der Reaktion hauptsächlich NO und NO₂ entstehen. Diese verschiedenen Stickstoffoxide werden in ihrer Gesamtheit auch mit NOx bezeichnet.

Die Luft, die für den Bleichvorgang der Rohsalpetersäure verwendet wird, wird als Bleichluft oder auch als "Sekundärluft" bezeichnet.

Als "Zweidruckverfahren" wird ein Verfahren zur Herstellung von Salpetersäure bezeichnet, bei dem die Ammoniakoxidationsreaktion bei einem niedrigeren Druck durchgeführt wird als die Absorption der Stickstoffoxide in Wasser zur Erzeugung von Salpetersäure. Letztere erfolgt in einer Absorptionsvorrichtung, in der Regel in einem Absorptionsturm. Der niedrigere Druck der Ammoniakoxidation wird hierin auch als "erster" Druck bezeichnet, während der höhere Druck der Absorption auch als "zweiter" Druck bezeichnet wird.

Als "Restgas" wird dasjenige Gas bezeichnet, welches bei der Absorption nicht zu flüssiger Salpetersäure umgesetzt wird, sondern den Absorptionsturm gasförmig verlässt. Dieses Restgas wird in der Restgasreinigung in der Regel durch Umsetzung mit Ammoniak zu Stickstoff reduziert, um den Gehalt des Restgases an Stickstoffoxiden (NOx) zu verringern. Dieses Restgas wird im angloamerikanischen Sprachraum auch als "tailgas" bezeichnet.

Der "NOx-Kompressor" ist derjenige Kompressor, mittels dessen bei einem Zweidruckverfahren das bei der Oxidationsreaktion entstandene NOx-Gas auf den höheren zweiten Druck komprimiert wird.

Als "Maschine" oder auch Hauptmaschine wird derjenige Anlagenbereich bezeichnet, der die miteinander gekoppelten und auf einer Welle angeordneten Kompressoren und Turbinen umfasst, in der Regel eine Dampfturbine, den Primärluftkompressor oder Hauptluftkompressor, den NOx-Kompressor und eine Restgasturbine, in der das Restgas nach der Reinigung auf einen niedrigeren Druck entspannt wird.

Durch die vorliegende Erfindung soll insbesondere ein Verfahren nach dem Zweidruckprinzip bereitgestellt werden, welches zur Bereitstellung von Bleichluft einen von der Hauptmaschine unabhängigen Sekundärluftkompressor nutzt, wobei (a) der Betriebspunkt des Hauptsatzes nicht oder nur geringfügigst beeinflusst wird und deshalb insbesondere Sekundärluft nicht auf dem Druckniveau der Ammoniakverbrennung zwischen den Luftkompressor und den NOx Kompressor der Hauptmachine eingespeist wird (b) Die Bleichung der Säure auf dem Druckniveau der Ammoniakverbrennung oder sogar darunter erfolgen kann und (c) die volle Kapazität des Luftkompressors der Hauptmaschine für die Ammoniakverbrennung bereitgestellt werden kann.

Gemäß der Erfindung wird das bei dem Bleichvorgang entstandene Gasgemisch stromabwärts des Bleichvorgangs mittels eines weiteren Luftkompressors oder einer weiteren Luftkompressorstufe auf den zweiten Druck gebracht, bei dem die Absorption des NOx-haltigen Gasstroms in Wasser stattfindet, wobei dieser weitere Luftkompressor oder die Luftkompressorstufe unabhängig von einem NOx-Kompressor arbeitet, welcher das Produktgasgemisch des Ammoniakoxidationsreaktors auf den zweiten Druck komprimiert. Bei dem Bleichvorgang wird die Rohsalpetersäure mittels der Bleichluft gestrippt, die dabei entstehende, mit NOx-Gasen beladene Bleichluft verlässt die Bleichvorrichtung und gemäß dieser Variante der Erfindung wird diese beladene Bleichluft anschließend mittels des weiteren Luftkompressors (Bleichluftkompressor) auf den erhöhten zweiten Druck gebracht. In dem eingangs genannten Stand der Technik gemäß WO 2018/162150 A1 wird hingegen nach einem Bleichvorgang bei erhöhtem Druck die Bleichluft ohne weitere Druckerhöhung in den Hochdruckbereich jenseits des NOx-Kompressors zurückgeführt, da der Bleichvorgang bereits bei dem erhöhten Druck stattfindet.

Gemäß einer bevorzugten Weiterbildung des erfindungsgemäßen Verfahrens liegt in dem Austrittsstrom einer Niederdruckbleichvorrichtung, welcher in einem weiteren Bleichluftkompressor oder einer weiteren Bleichluftkompressorstufe auf den zweiten Druck gebracht wird, am Eintritt des weiteren Bleichluftkompressors oder einer weiteren Bleichluftkompressorstufe ein Rest-Gehalt an NOx (NO+NO₂) von 0-5000, bevorzugt 0-100, und besonders bevorzugt 0-30 vppm vor.

Gemäß einer bevorzugten Weiterbildung des erfindungsgemäßen Verfahrens ist in dem Austrittsstrom einer Niederdruckbleichvorrichtung, insbesondere eines Bleichturms, welcher bei dem ersten Druck arbeitet, welcher (der Austrittsstrom) in einem weiteren Bleichluftkompressor oder einer weiteren Bleichluftkompressorstufe auf den zweiten Druck gebracht wird, eine Überwachungseinrichtung für den Rest-Gehalt an NOx (NO+NO₂) und/oder von Wasser und/oder für von diesen Gehalten abhängige Parameter (wie z.B. Taupunkte) vorgesehen.

Gemäß einer bevorzugten Weiterbildung des erfindungsgemäßen Verfahrens sind im Säurezulaufstrom zu einer Niederdruckbleichvorrichtung, insbesondere zu einem Bleichturm, geeignete Maßnahmen zur Einhaltung eines bevorzugten Rest-Gehaltes an NOx (NO+NO₂) vorgesehen.

Gemäß einer bevorzugten Weiterbildung des erfindungsgemäßen Verfahrens besteht die Maßnahme zur Einhaltung des bevorzugten Rest-Gehaltes an NOx (NO+NO₂) am Eintritt des weiteren Bleichluftkompressors oder einer weiteren Bleichluftkompressorstufe darin, einen vorgeschalteten Bleichturm vorzusehen, der auf dem Druckniveau der Absorptionsvorrichtung arbeitet und gasseitig von dem Austrittsstrom des weiteren Bleichluftkompressors oder einer weiteren Bleichluftkompressorstufe gespeist wird.

Gemäß einer bevorzugten Weiterbildung des erfindungsgemäßen Verfahrens sind im Austrittsstrom der Niederdruckbleichvorrichtung geeignete Maßnahmen zur Einhaltung des bevorzugten Rest-Gehaltes an NOx (NO+NO₂) am Eintritt des weiteren Bleichluftkompressors oder einer weiteren Bleichluftkompressorstufe vorgesehen.

Gemäß einer bevorzugten Weiterbildung des erfindungsgemäßen Verfahrens besteht die Maßnahme im Austrittsstrom der Niederdruckbleichvorrichtung, zur Einhaltung des bevorzugten Rest-Gehaltes an NOx (NO+NO₂) am Eintritt des weiteren Bleichluftkompressors oder einer weiteren Bleichluftkompressorstufe, darin, eine katalytische Maßnahme zur Reduktion des NOx Gehaltes vorzusehen, insbesondere eine selektive katalytische Reduktion von NOx mit Ammoniak.

Gemäß einer bevorzugten Weiterbildung des erfindungsgemäßen Verfahrens besteht die Maßnahme im Austrittsstrom der Niederdruckbleichvorrichtung, zur Einhaltung des bevorzugten Rest-Gehaltes an NOx (NO+NO₂) am Eintritt des weiteren Bleichluftkompressors oder einer weiteren Bleichluftkompressorstufe, darin, eine Verdünnung des Austrittsstroms der Niederdruckbleichvorrichtung mit Zusatzluft vorzusehen, welche bevorzugt vom ersten Bleichluftkompressor oder von der ersten Bleichluftkompressorstufe bereitgestellt wird.

Gemäß einer bevorzugten Weiterentwicklung des erfindungsgemäßen Verfahren stehen der weitere Bleichluftkompressor oder die Bleichluftkompressorstufe mit dem Sekundärluftkompressor oder der Sekundärluftkompressorstufe in Wirkverbindung. Mit anderen Worten entweder zwei separate Kompressoren oder zwei separate Kompressorstufen eines einzigen Kompressors sind hier vorzugsweise antriebstechnisch miteinander gekoppelt, wobei der erste Kompressor, der hierin als Sekundärluftkompressor bezeichnet wird, oder die erste Kompressorstufe die in einem separaten Leitungsstrang zugeführte Sekundärluft zunächst auf den ersten Druck bringt, der für den Bleichvorgang der Rohsalpetersäure benötigt wird und wobei anschließend der zweite Kompressor, der hierin zur Unterscheidung von dem Sekundärluftkompressor als Bleichluftkompressor oder weiterer Bleichluftkompressor bezeichnet wird, dazu dient, die beladene Sekundärluft nach dem Bleichvorgang auf einen erhöhten zweiten Druck zu bringen, bei dem auch die Absorption der Salpetersäure stattfindet.

Gemäß einer bevorzugten Weiterentwicklung des erfindungsgemäßen Verfahrens ist der weitere Bleichluftkompressor oder die Bleichluftkompressorstufe mit dem Sekundärluftkompressor oder der Sekundärluftkompressorstufe über Getriebemittel gekoppelt.

Gemäß einer bevorzugten Weiterentwicklung des erfindungsgemäßen Verfahrens wird die mittels des separaten Sekundärluftkompressors oder der separaten Sekundärluftkompressorstufe auf den ersten Druck gebrachte Sekundärluft über eine separate Leitung einer bei dem ersten Druck arbeitenden Bleichvorrichtung zugeführt. Zwar sind aus dem Stand der Technik bereits Anlagen bekannt, bei denen man zusätzlich zu dem Primärluftkompressor einen separaten Sekundärluftkompressor vorsieht, welcher in einem separaten Leitungsstrang angeordnet ist. Jedoch wird bei diesen bekannten Verfahren dann die beladene Sekundärluft nach dem Bleichvorgang in einen Bereich stromaufwärts des NOx-Kompressors geführt, so dass dieser zusätzlich auch die beladene Bleichluft auf den erhöhten zweiten Druck bringen muss, bevor diese in den Absorptionsprozess zurückgeführt werden kann. Somit wird bei dieser bekannten Lösung durch den separaten Sekundärluftkompressor der NOX-Kompressor nicht entlastet.

Gemäß einer bevorzugten Weiterentwicklung des erfindungsgemäßen Verfahrens wird das die Bleichvorrichtung verlassende Gasgemisch von mit NOx beladener Bleichluft über eine Leitung dem weiteren Bleichluftkompressor oder der Bleichluftkompressorstufe zugeführt. Erfindungsgemäß übernimmt dann dieser weitere Bleichluftkompressor die Aufgabe, den Druck der beladenen Bleichluft auf den zweiten Druck zu komprimieren, so dass diese nun bei erhöhtem Druck vorliegende beladene Bleichluft in den Absorptionsprozess zurückgeführt werden kann, wobei der NOx-Kompressor umgangen wird.

Gemäß einer bevorzugten Weiterentwicklung des erfindungsgemäßen Verfahrens wird somit vorzugsweise das den Bleichluftkompressor oder die Bleichluftkompressorstufe verlassende, auf den zweiten Druck gebrachte Gasgemisch über eine Leitung in einen Bereich stromabwärts des NOx-Kompressors geführt und wird anschließend der Absorptionsvorrichtung zugeführt.

Das erfindungsgemäße Verfahren bietet den Vorteil, dass ein erster Sekundärluftkompressor oder eine erste Stufe bzw. eine Zwischenstufe eines mehrstufigen Sekundärluftkompressors an ein bereits bestehendes Bleichluftsystem einer Anlage angeschlossen werden kann. Das Bleichen erfolgt bei dem erfindungsgemäßen Verfahren auf dem ersten niedrigeren Druck von beispielsweise 2 bar bis 6 bar und somit auf dem ursprünglichen Druckniveau. Die beladene Bleichluft kann in die zweite bzw. nachgeschaltete Kompressorstufe oder in den zweiten Kompressor (den weiteren Bleichluftkompressor gemäß der hierin verwendeten Terminologie) geleitet, dort auf den erhöhten zweiten Druck von beispielsweise 9 bar bis 16 bar gebracht werden und dann in den Prozess zur Herstellung von Salpetersäure (in der Absorptionsvorrichtung) zurückgeführt werden.

Das Sekundärluftsystem kann die Funktion einer Zwischenkühlung übernehmen. Die Kühlung der Austrittsluft des Bleichprozesses, die in dem nachgeschalteten weiteren Bleichluftkompressor auf einen erhöhten Druck gebracht wird, kann beispielsweise in einem Hochdruck-Säurekondensator erfolgen.

Gegenstand der vorliegenden Erfindung ist weiterhin eine Anlage zur Herstellung von Salpetersäure, insbesondere nach einem Verfahren der zuvor beschriebenen Art, umfassend einen Primärluftkompressor, mindestens einen in einem zum Primärluftkompressor separaten Leitungsstrang angeordneten Sekundärluftkompressor, einen auf der gleichen Welle wie der Primärluftkompressor angeordneten NOx-Kompressor, einen Ammoniakoxidationsreaktor, eine Absorptionsvorrichtung und eine Bleichvorrichtung, wobei erfindungsgemäß stromabwärts zu dem Sekundärluftkompressor mindestens ein weiterer Kompressor, nämlich ein Bleichluftkompressor oder mindestens eine weitere Bleichluftkompressorstufe angeordnet ist, mittels dessen (derer) ein beladener Gasstrom aus der Bleichvorrichtung auf den zweiten Druck gebracht wird, bei dem die Absorption des NOx-haltigen Gasstroms in Wasser stattfindet.

Gemäß einer bevorzugten Weiterbildung der Erfindung ist bei der erfindungsgemäßen Anlage der Sekundärluftkompressor ausgangsseitig über wenigstens eine Leitung mit einer Bleichvorrichtung verbunden, die etwa bei dem gleichen Druck arbeitet, bei dem die Reaktion in dem Ammoniakoxidationsreaktor stattfindet und von der Bleichvorrichtung ausgangsseitig ausgehend führt wenigstens eine Leitung zur Eingangsseite des weiteren Bleichluftkompressors oder der weiteren Bleichluftkompressorstufe, wobei der weitere Bleichluftkompressor bzw. die weitere Bleichluftkompressorstufe von dem NOx-Kompressor verschieden ist. Mit anderen Worten, der vorgenannte Bleichluftkompressor ist nicht der NOx-Kompressor. Die Anlage umfasst somit bei dieser Variante wenigstens vier Kompressoren, den Primärluftkompressor, den NOx-Kompressor, den Sekundärluftkompressor und den weiteren Bleichluftkompressor, welcher dem Sekundärluftkompressor im Strömungsweg nachgeschaltet ist, um die beladene Bleichluft, die die Bleichvorrichtung verlässt, anschließend auf einen höheren Druck zu bringen, welcher etwa demjenigen Druck entspricht, bei dem die Absorption der NOx-Gase in der Absorptionsvorrichtung stattfindet. Allerdings kann der Sekundärluftkompressor entweder als zwei getrennte Kompressoren ausgebildet sein oder aber auch als zwei Kompressorstufen des gleichen, zwei oder mehrere Kompressorstufen umfassenden Kompressors. Im letztgenannten Fall wären nur insgesamt drei Kompressoren vorhanden, aber insgesamt wenigstens vier Kompressorstufen.

Gemäß einer bevorzugten Weiterbildung der Erfindung ist eine von der Hochdruckseite des weiteren Bleichluftkompressors oder der weiteren Bleichluftkompressorstufe ausgehende Leitung vorgesehen, welche in eine Leitung im Hochdruckbereich stromabwärts des NOx-Kompressors mündet. Über diese Leitung kann man dann die mit NOx beladene Bleichluft in den Prozess der Absorption in der Absorptionsvorrichtung zurückführen. Da der weitere Bleichluftkompressor die Druckerhöhung dieses Gasstroms übernimmt, wird der NOx-Kompressor hierdurch nicht belastet und muss daher bei einem Revamp zur Erhöhung der Kapazität der Anlage nicht ersetzt werden.

Eine mögliche alternative konstruktive Variante der Erfindung sieht vor, dass der Sekundärluftkompressor und der weitere Bleichluftkompressor als zwei getrennte Kompressoren ausgebildet sind, die über Getriebemittel miteinander gekoppelt sind. Durch diese Kopplung kann man beispielsweise mit einer Kompressoranordnung arbeiten, bei der über eine Antriebswelle beide Kompressoren angetrieben werden.

Eine zweite alternative konstruktive Variante der Erfindung sieht vor, dass der Sekundärluftkompressor als eine erste Kompressorstufe eines Kompressors mit mindestens zwei Kompressorstufen ausgebildet ist und die weitere Bleichluftkompressorstufe als eine zweite Kompressorstufe des gleichen Kompressors ausgebildet ist, wobei beide Kompressorstufen über Getriebemittel miteinander gekoppelt sind.

Gemäß einer bevorzugten Weiterbildung der vorliegenden Erfindung sind der Sekundärluftkompressor und der weitere Bleichluftkompressor oder die Sekundärluftkompressorstufe und die weitere Bleichluftkompressorstufe als Getriebe-Turboverdichter ausgebildet, wobei die jeweiligen Verdichterwellen der Kompressoren oder der Kompressorstufen über Getriebemittel miteinander gekoppelt sind. Es hat sich gezeigt, dass dieses Maschinenkonzept für den Sekundärluftkompressor wesentlich günstiger ist als beispielsweise Verfahren, bei denen man zwei Bleichvorrichtungen einsetzt, von denen eine im Strömungsweg erste Bleichvorrichtung bei hohem Druck arbeitet, da dann der einzige Sekundärluftkompressor die Sekundärluft (Bleichluft) auf den zweiten höheren Druck bringen muss, bei dem die Absorption der NOx-Gase stattfindet und da auch der bei höherem Druck durchgeführte Bleichvorgang Nachteile mit sich bringt.

Gemäß einer bevorzugten Weiterbildung der Erfindung sind der Primärluftkompressor und der NOx-Kompressor auf der gleichen Antriebswelle angeordnet, während der Sekundärluftkompressor oder die Sekundärluftkompressorstufe und der weitere Bleichluftkompressor oder die weitere Bleichluftkompressorstufe in einem von der Antriebswelle separaten Antriebsstrang angeordnet sind. Der bisherige Bereich der so genannten Hauptmaschine, bei der der Primärluftkompressor und der NOx-Kompressor und meistens auch die Restgasturbine sowie gegebenenfalls eine Dampfturbine auf der gleichen Antriebswelle angeordnet sind, muss daher bei einem Revamp der Anlage nicht verändert werden. Vielmehr befindet sich der Sekundärluftkompressor, der zunächst die Sekundärluft auf den für den Bleichvorgang notwendigen (niedrigeren ersten) Druck bringt, in einem von der Hauptmaschine separaten Antriebsstrang. Die durch das Strippen der Rohsalpetersäure mit Luft beim Bleichvorgang entstandene beladene Bleichluft wird zu dem weiteren Bleichluftkompressor geleitet und dann von diesem auf den höheren zweiten Druck gebracht, welcher dem Druck bei der Absorption der NOx-Gase in Wasser entspricht, so dass dieser Gasstrom nicht von dem NOx-Kompressor komprimiert werden muss.

Gemäß einer bevorzugten Weiterbildung der Erfindung umfasst die Anlage einen Hochdruck-Säurekondensator, welcher stromabwärts des weiteren Bleichluftkompressors oder der weiteren Bleichluftkompressorstufe angeordnet ist. Mit "Hochdruck" ist in diesem Fall gemeint, dass dieser Säurekondensator bei dem erhöhten zweiten Druck, insbesondere in dem oben angegebenen Druckbereich arbeitet. Dies kann bei einem Revamp einer Zweidruckanlage ein bereits im Hochdruckbereich, das heißt stromabwärts des NOx-Kompressors vorhandener Hochdruck-Säurekondensator sein, stromaufwärts dessen die Leitung einmündet, die von dem weiteren Bleichkompressor kommt, so dass auch hier kein Umbau dieses Anlagenbereichs notwendig ist, sondern der vorhandene Hochdruck-Säurekondensator genutzt werden kann. Nachfolgend wird die vorliegende Erfindung anhand eines Ausführungsbeispiels unter Bezugnahme auf die beiliegende Zeichnung näher beschrieben. Dabei zeigt:
Figur 1 ein schematisch vereinfachtes Anlagenschema einer beispielhaften erfindungsgemäßen Anlage zur Herstellung von Salpetersäure nach dem Zweidruckverfahren;
Figur 2 ein schematisches vereinfachtes Analgenschema einer beispielhaften Anlage zur Herstellung von Salpetersäure nach dem Zweidruckverfahren gemäß einer alternativen Ausführungsvariante der vorliegenden Erfindung.

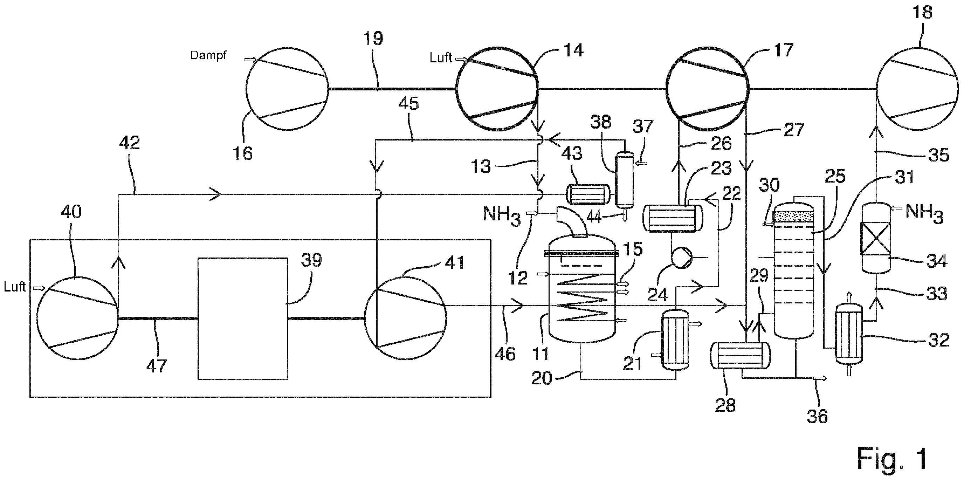

Nachfolgend wird zunächst auf die Figur 1 Bezug genommen und anhand dieser wird eine erste beispielhafte Ausführungsvariante des erfindungsgemäßen Verfahrens näher erläutert. Die Darstellung gemäß Figur 1 ist schematisch stark vereinfacht und es sind nur diejenigen Anlagenkomponenten dargestellt, die im Rahmen der vorliegenden Erfindung von Bedeutung sind.

Die erfindungsgemäße Anlage umfasst einen Ammoniakoxidationsreaktor 11, dem über eine Leitung 12 (siehe Pfeil 12) Ammoniak zugeführt wird. In diesem Ammoniakoxidationsreaktor 11 wird Ammoniak mit Hilfe von Luftsauerstoff katalytisch zu Stickstoffoxiden (NOx) oxidiert. Die Zufuhr der Luft für diese Oxidationsreaktion (so genannte Primärluft) erfolgt über die Leitung 13, wobei die Primärluft mit Hilfe des Luftkompressors 14 auf einen ersten Druck (beispielsweise 2 bis 6 bar) gebracht wird, bei dem die Reaktion im Ammoniakoxidationsreaktor stattfindet. Die Oxidation des Ammoniaks erfolgt katalytisch bei hohen Temperaturen von beispielsweise etwa 900 °C, wobei das Ammoniak zunächst zu Stickstoffmonoxid (NO) und dann nach Absenkung der Temperatur zu Stickstoffdioxid (NO₂) oxidiert wird. Die hohe Temperatur im Ammoniakoxidationsreaktor 11 wird zur Erzeugung von Dampf genutzt, wobei der erzeugte Dampf 15 einer Dampfturbine 16 zugeleitet wird, mittels derer zumindest ein Teil der Antriebsenergie für die in der Anlage verwendeten Kompressoren gewonnen wird. Dazu sind die Dampfturbine 16, ein erster Luftkompressor 14, ein NOx-Kompressor 17 und eine Restgasturbine 18 auf der gleichen Welle 19 angeordnet.

Das im Ammoniakoxidationsreaktor 11 erzeugte NOx-haltige Produktgas verlässt den Reaktor über die Leitung 20 und wird zunächst einem oder mehreren Wärmetauschern 21 zugeführt zwecks Wärmerückgewinnung und wird danach über die Leitung 22 einem Mitteldruck-Säurekondensator 23 zugeführt, in dem eine Kühlung erfolgt, so dass in dem Produktgasstrom enthaltenes Wasser kondensiert und sich mit dem NOx-Gas ein erster Anteil Säurekondensat bildet, welches mittels der Pumpe 24 dem Absorptionsturm 25 zugeführt werden kann (die entsprechende Verbindungsleitung ist hier nicht dargestellt). Der NOx-haltige Gasstrom strömt aus dem Säurekondensator 23 über die Leitung 26 zu dem NOx-Kompressor 17 und wird dort auf einen höheren Druck komprimiert (beispielsweise auf etwa 9 bis 16 bar), da es sich vorliegenden um ein Zweidruckverfahren handelt und wird danach über die Leitung 27 einem Hochdruck-Säurekondensator 28 zugeführt, in dem ebenfalls teilweise Säurekondensat anfällt und das Produktgemisch gelangt dann über die Leitung 29 in den Absorptionsturm 25, in dem das NOx-Gas in Wasser absorbiert wird und Salpetersäure (HNO₃) erzeugt wird. Dem Absorptionsturm 25 kann das für die Reaktion notwendige Prozesswasser über eine durch den Pfeil 30 angedeutete Leitung zugeführt werden.

Das Restgas (so genanntes tail gas) verlässt den Absorptionsturm 25 oben über die Leitung 31, wird durch einen Restgaserhitzer 32 geleitet und wird dann über die Leitung 33 einem Restgasreaktor 34 zugeführt, welchem außerdem Ammoniak zugeführt wird, welches mit den noch im Restgas enthaltenen Stickstoffoxiden zu Stickstoff und Wasser reagiert, so dass das Restgas von NOx befreit und gereinigt wird. Das Restgas wird dann über die Leitung 35 der Restgasturbine 18 zugeführt und dort entspannt. Dadurch wird die Restgasturbine 18 angetrieben und da sie sich auf der gleichen Welle 19 befindet wie die beiden Kompressoren 14 und 17, liefert die Restgasturbine 18 ebenfalls einen Anteil der Antriebsenergie für die beiden Kompressoren 14, 17. Das entspannte Restgas kann beispielsweise über einen Kamin abgeführt werden.

Die im Absorptionsturm 25 erzeugte Salpetersäure wird über den Pfeil 36 abgeführt (bei der Darstellung gemäß Figur 1 handelt es sich um ein vereinfachtes Anlagenschema, in dem nicht alle Anlagenteile und Leitungen dargestellt sind) und wird dann wie durch den weiteren Pfeil 37 angedeutet einem Bleichturm 38 zugeführt, in dem die Salpetersäure gereinigt wird, indem die im Produktgemisch enthaltenen NOx-Gase mittels Luft gestrippt werden. Dazu verwendet man die so genannte Sekundärluft, die bei herkömmlichen Zweidruckverfahren zur Herstellung von Salpetersäure von dem gleichen Kompressor geliefert wird wie die Primärluft zur Oxidation des Ammoniaks zu NOx. Bei dem erfindungsgemäßen Verfahren wird jedoch eine Anordnung von wenigstens zwei Kompressoren 40, 41 oder einem zwei- oder mehrstufiger Kompressor verwendet, insbesondere ein Getriebe-Turboverdichter wie in dem Ausführungsbeispiel dargestellt. Dieser Getriebe-Turboverdichter umfasst einen ersten Kompressor 40 (hierin auch als Sekundärluftkompressor bezeichnet) oder eine erste Kompressorstufe, der Luft zugeführt wird, wobei die auf einen erhöhten Druck komprimierte Luft über die Leitung 42 dem Bleichturm 38 zugeführt wird, so dass der Bleichvorgang wie bei einer herkömmlichen Zweidruckanlage bei einem ersten niedrigeren Druck erfolgt, der etwa in der gleichen Größenordnung liegt wie der Druck in dem Ammoniakoxidationsreaktor 11. Dem Bleichturm 38 kann noch ein Kühler 43 vorgeschaltet sein. Die gereinigte Salpetersäure wird im unteren Bereich aus dem Bleichturm 38 über die Leitung 44 (siehe Pfeil) abgeführt.

Nach dem Bleichvorgang im Bleichturm 38 wird der Gasstrom im oberen Bereich aus dem Bleichturm über die Leitung 45 abgeführt und dann dem zweiten Kompressor 41 (hierin auch als weiterer Bleichluftkompressor bezeichnet) oder der zweiten Kompresssorstufe zugeführt und über diesen zweiten Kompressor 41 auf einen höheren Druck verdichtet, so dass der verdichtete Gasstrom über die Leitung 46 stromabwärts des zweiten Kompressors 41 in den Hochdruckbereich der Anlage strömen kann, wo die Leitung 46 in die Leitung 27 einmündet, in der die von dem NOx-Kompressor 17 verdichteten NOx-Gase strömen, so dass der Gasstrom aus der Leitung 46 gemeinsam mit dem NOx-Gasstrom aus Leitung 27 dem Hochdruck-Säurekondensator 28 zugeleitet werden kann und in die Salpetersäureproduktion zurückgeführt wird.

Eine Besonderheit der erfindungsgemäßen Anlage besteht darin, dass die beiden Kompressoren 40, 41, das heißt der erste Kompressor 40, der die Sekundärluft auf einen ersten Druck verdichtet und der zweite Kompressor 41, der den Gasstrom aus dem Bleichturm 38 auf einen zweiten Druck, welcher höher ist als der erste Druck, verdichtet, über ein Getriebe 39 quasi mechanisch miteinander gekoppelt sind. Getriebe-Turboverdichter sind grundsätzlich aus dem Stand der Technik bekannt und werden beispielsweise in der EP 3 106 670 A1 beschrieben. In der Regel umfassen Getriebe-Turboverdichter eine Antriebswelle und mindestens zwei Verdichterwellen der jeweiligen Verdichter, wobei die Verdichterwellen jeweils über Getriebemittel mit der Antriebswelle und somit auch untereinander gekoppelt sind. Antriebswelle und Verdichterwellen können jeweils zueinander parallel oder aber auch zueinander rechtwinklig angeordnet sein, bei Verwendung von Kegelrädern wie beispielsweise in der vorgenannten EP-Schrift. In der Figur 1 ist der erfindungsgemäß verwendete Getriebe-Turboverdichter mit den beiden Kompressoren 40, 41 nur schematisch dargestellt, wobei die Kopplung über eine Welle 47 angedeutet ist und das Getriebe 39 durch eine rechteckige Box dargestellt ist.

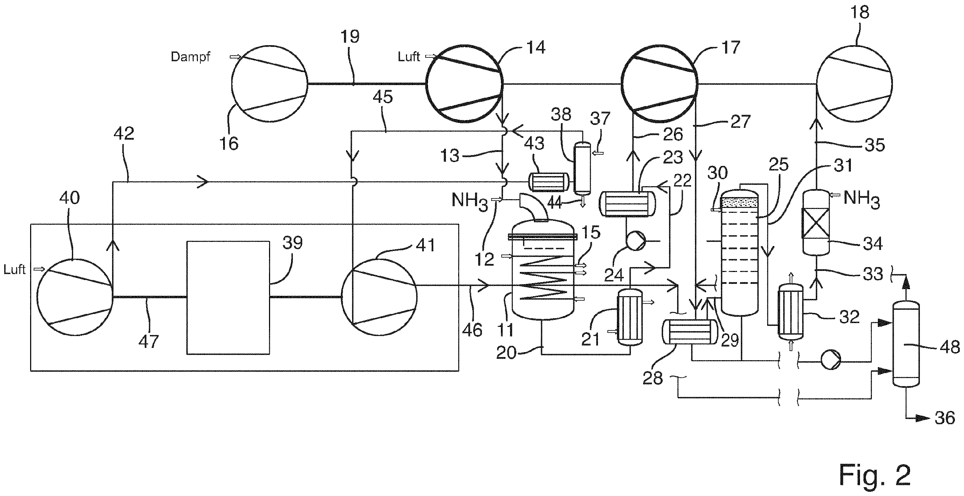

Nachfolgend wird unter Bezugnahme auf die Figur 2 eine beispielhafte alternative Variante der vorliegenden Erfindung näher erläutert. Die Anlage zur Herstellung von Salpetersäure nach dem Zweidruckverfahren ist bei der Variante gemäß Figur 2 in weiten Teilen ähnlich ausgestaltet wie bei der Variante gemäß Figur 1, so dass insoweit auf die vorhergehende Beschreibung Bezug genommen wird. Nachfolgend werden daher nur diejenigen Bereiche der Anlage näher erläutert, in denen Abweichungen gegeben sind. Diese Abweichungen bestehen im Wesentlichen im unteren rechten Bereich der Zeichnung. Anders als bei der Variante gemäß Figur 1 wird der im zweiten Bleichluftkompressor 14 verdichtete mit NOx beladene Gasstrom aus dem Bleichluftkompressor 41 über die Leitung 46 nicht direkt in den Hochdruckbereich stromabwärts des NOx-Kompressors 17 und stromaufwärts des Hochdrucksäurekondensators 28 geführt, sondern wird zunächst einem vorgeschalteten Bleichturm 48 zugeführt, wo dieser Gasstrom den Säurestrom aus dem Absorptionsturm 25 bleicht (durch Strippen), wobei der Gasstrom dann oberseitig aus dem vorgeschalteten Bleichturm 48 austritt und von dort aus in den Hochdruckbereich geführt wird, wo er dem NOx-Gasstrom in Leitung 27 zugemischt wird. Die Säure aus dem Absorptionsturm 25 und aus dem Hochdruck-Säurekondensator 28 tritt im Gegenstrom zu dem Gasstrom in den vorgeschalteten Bleichturm 48 ein und die vorgereinigte Säure tritt um unteren Bereich aus dem Bleichturm 48 aus und wird dann über die Leitung 36 (siehe Pfeil) dem Bleichturm 38 im Niederdruckbereich zugeführt, der hierin auch als Niederdruckbleichvorrichtung bezeichnet wird. Auf diese Weise kann ein bevorzugter Rest-Gehaltes an NOx (NO+NO₂) am Eintritt des weiteren Bleichluftkompressors 41 oder einer weiteren Bleichluftkompressorstufe eingehalten werden, da quasi zwei Bleichmaßnahmen hintereinandergeschaltet sind.

Eine andere alternative Variante des Verfahrens, die nicht in den Zeichnungen dargestellt ist, sieht vor, dass im Austrittsstrom der Niederdruckbleichvorrichtung zur Einhaltung des bevorzugten Rest-Gehaltes an NOx (NO+NO₂) am Eintritt des weiteren Bleichluftkompressors 41 oder der weiteren Bleichluftkompressorstufe eine katalytische Maßnahme zur Reduktion des NOx Gehaltes vorgesehen ist, die insbesondere in einer selektiven katalytischen Reduktion von NOx mit NH₃ besteht. Dazu kann beispielsweise aus der in Figur 1 dargestellten Leitung 12 Ammoniak abgezweigt und in die Leitung 45 stromabwärts des Bleichturms eingespeist werden, um den NOx-Gehalt in der beladenen Bleichluft durch Umsetzung mit Ammoniak zu reduzieren und somit den Bleichluftkompressor 41 zu schützen.

Eine weitere alternative Variante des erfindungsgemäßen Verfahrens, die ebenfalls nicht in den Zeichnungen dargestellt ist, sieht im Austrittsstrom der Niederdruckbleichvorrichtung als Maßnahme zur Einhaltung des bevorzugten Rest-Gehaltes an NOx (NO+NO₂) am Eintritt des weiteren Bleichluftkompressors oder der weiteren Bleichluftkompressorstufe eine Verdünnung des Austrittsstroms der Niederdruckbleichvorrichtung mit Zusatzluft vor, welche zum Beispiel vom ersten Bleichluftkompressor 40 oder der ersten Bleichluftkompressorstufe bereitgestellt werden kann. Dazu kann man beispielsweise aus der Leitung 42 stromabwärts des Bleichluftkompressors 40 Luft abzweigen, über eine bevorzugt über ein Ventil absperrbare Zweigleitung, die dann in die Leitung 45 stromabwärts des Bleichturms 48 einmündet. Alternativ dazu könnte diese Zweigleitung auch zwischen dem Kühler 43 und dem Bleichturm 38 einmünden und dort Zusatzluft zuführen.

### Bezugszeichenliste

- 11: Ammoniakoxidationsreaktor
- 12: Leitung für Ammoniak
- 13: Leitung für Primärluft
- 14: Luftkompressor
- 15: Dampf
- 16: Dampfturbine
- 17: NOx-Kompressor
- 18: Restgasturbine
- 19: Welle
- 20: Leitung für NOx-haltiges PRodukgas
- 21: Wärmetauscher
- 22: Leitung
- 23: Mitteldruck-Säurekondensator
- 24: Pumpe
- 25: Absorptionsturm, Absorptionsvorrichtung
- 26: Leitung
- 27: Leitung
- 28: Hochdruck-Säurekondensator
- 29: Leitung
- 30: Pfeil, Zufuhr von Prozesswasser
- 31: Leitung für Restgas
- 32: Restgaserhitzer
- 33: Leitung
- 34: Restgasreaktor
- 35: Leitung
- 36: Pfeil
- 37: Pfeil
- 38: Bleichturm/Niederdruckbleichvorrichtung
- 39: Getriebe
- 40: Sekundärluftkompressor oder -kompressorstufe
- 41: Bleichluftkompressor oder -kompressorstufe
- 42: Leitung für Sekundärluft (Bleichluft)
- 43: Kühler
- 44: Leitung für Salpetersäure
- 45: Leitung
- 46: Leitung
- 47: Welle
- 48: vorgeschalteter Bleichturm

## Patentansprüche

1. Verfahren zur Herstellung von Salpetersäure nach dem Ostwald-Verfahren, umfassend die Umsetzung von Ammoniak mit Luftsauerstoff (Primärluft) zu einem NOx-haltigen Gasstrom in einem Ammoniakoxidationsreaktor (11) bei einem ersten Druck und die Absorption des NOx-haltigen Gasstroms in Wasser in einer Absorptionsvorrichtung (25) bei einem zweiten Druck, welcher höher ist als der erste Druck, wobei das Verfahren einen Schritt umfasst, in dem ein Bleichen der Salpetersäure mit Bleichluft (Sekundärluft) vorgesehen ist, wobei das Bleichen etwa auf dem Druckniveau des ersten Drucks erfolgt, **dadurch gekennzeichnet, dass** die Sekundärluft über mindestens einen separaten Sekundärluftkompressor (40) oder eine Sekundärluftkompressorstufe auf den Betriebsdruck des Bleichvorgangs gebracht wird, wobei dieser separate Sekundärluftkompressor (40) unabhängig ist von dem Kompressor (14) mittels dessen die Primärluft auf den ersten Druck der Ammoniakoxidationsreaktion gebracht wird, wobei das bei dem Bleichvorgang entstandene Gasgemisch stromabwärts des Bleichvorgangs mittels eines weiteren Bleichluftkompressors (41) oder einer weiteren Bleichluftkompressorstufe auf den zweiten Druck gebracht wird, bei dem die Absorption des NOx-haltigen Gasstroms in Wasser stattfindet, wobei dieser weitere Bleichluftkompressor (41) oder die Bleichluftkompressorstufe unabhängig von einem NOx-Kompressor (17) arbeitet, welcher das Produktgasgemisch des Ammoniakoxidationsreaktors (11) auf den zweiten Druck komprimiert.

2. Verfahren nach Anspruch 1, **dadurch gekennzeichnet, dass** in dem Austrittsstrom einer Niederdruckbleichvorrichtung (38), welcher in einem weiteren Bleichluftkompressor (41) oder einer weiteren Bleichluftkompressorstufe auf den zweiten Druck gebracht wird, am Eintritt des weiteren Bleichluftkompressors (41) oder einer weiteren Bleichluftkompressorstufe ein Rest-Gehalt an NOx (NO+NO₂) von 0-5000, bevorzugt 0-100, und besonders bevorzugt 0-30 vppm vorliegt.

3. Verfahren nach Anspruch 1 oder 2, **dadurch gekennzeichnet, dass** in dem Austrittsstrom einer Niederdruckbleichvorrichtung (38), welcher in einem weiteren Bleichluftkompressor (41) oder einer weiteren Bleichluftkompressorstufe auf den zweiten Druck gebracht wird, eine Überwachungseinrichtung für den Rest-Gehalt an NOx (NO+NO₂) und / oder von Wasser und/oder für von diesen Gehalten abhängige Parameter (wie z.B. Taupunkte) vorgesehen ist.

4. Verfahren nach einem der Ansprüche 1 bis 3, **dadurch gekennzeichnet, dass** im Säurezulaufstrom zu einer Niederdruckbleichvorrichtung (38) geeignete Maßnahmen zur Einhaltung eines bevorzugten Rest-Gehaltes an NOx (NO+NO₂) vorgesehen sind.

5. Verfahren nach Anspruch 4, **dadurch gekennzeichnet, dass** die Maßnahme zur Einhaltung des bevorzugten Rest-Gehaltes an NOx (NO+NO₂) am Eintritt des weiteren Bleichluftkompressors (41) oder einer weiteren Bleichluftkompressorstufe in einem vorgeschalteten Bleichturm (48) besteht, der auf dem Druckniveau der Absorptionsvorrichtung (25) arbeitet und gasseitig von dem Austrittsstrom des weiteren Bleichluftkompressors (41) oder einer weiteren Bleichluftkompressorstufe gespeist wird.

6. Verfahren nach einem der Ansprüche 2 bis 5, **dadurch gekennzeichnet, dass** im Austrittsstrom der Niederdruckbleichvorrichtung (38) geeignete Maßnahmen zur Einhaltung des bevorzugten Rest-Gehaltes an NOx (NO+NO₂) am Eintritt des weiteren Bleichluftkompressors (41) oder einer weiteren Bleichluftkompressorstufe vorgesehen sind.

7. Verfahren nach Anspruch 6, **dadurch gekennzeichnet, dass** die Maßnahme im Austrittsstrom der Niederdruckbleichvorrichtung zur Einhaltung des bevorzugten Rest-Gehaltes an NOx (NO+NO₂) am Eintritt des weiteren Bleichluftkompressors (41) oder einer weiteren Bleichluftkompressorstufe in einer katalytischen Maßnahme zur Reduktion des NOx Gehaltes, insbesondere einer selektiven katalytischen Reduktion von NOx mit NH₃ besteht.

8. Verfahren nach Anspruch 6 oder 7, **dadurch gekennzeichnet, dass** die Maßnahme im Austrittsstrom der Niederdruckbleichvorrichtung (38) zur Einhaltung des bevorzugten Rest-Gehaltes an NOx (NO+NO₂) am Eintritt des weiteren Bleichluftkompressors (41) oder einer weiteren Bleichluftkompressorstufe in einer Verdünnung des Austrittsstroms der Niederdruckbleichvorrichtung (38) mit Zusatzluft, bevorzugt bereitgestellt vom ersten Bleichluftkompressor (41) oder der ersten Bleichluftkompressorstufe, besteht.

9. Verfahren nach einem der Ansprüche 1 bis 8, **dadurch gekennzeichnet, dass** der weitere Bleichluftkompressor (41) oder die Bleichluftkompressorstufe mit dem Sekundärluftkompressor (40) oder der Sekundärluftkompressorstufe in Wirkverbindung steht.

10. Verfahren nach Anspruch 9, **dadurch gekennzeichnet, dass** der weitere Bleichluftkompressor (41) oder die Bleichluftkompressorstufe mit dem Sekundärluftkompressor (40) oder der Sekundärluftkompressorstufe über Getriebemittel gekoppelt ist.

11. Verfahren nach einem der Ansprüche 1 bis 10, **dadurch gekennzeichnet, dass** die mittels des separaten Sekundärluftkompressors (40) oder der separaten Sekundärluftkompressorstufe auf den ersten Druck gebrachte Sekundärluft über eine separate Leitung (42) einer bei dem ersten Druck arbeitenden Bleichvorrrichtung (38) zugeführt wird.

12. Verfahren nach Anspruch 11, **dadurch gekennzeichnet, dass** das die Bleichvorrichtung (38) verlassende Gasgemisch von mit NOx beladener Bleichluft über eine Leitung (45) dem weiteren Bleichluftkompressor (41) oder der Bleichluftkompressorstufe zugeführt wird.

13. Verfahren nach einem der Ansprüche 1 bis 12, **dadurch gekennzeichnet, dass** das den Bleichluftkompressor (41) oder die Bleichluftkompressorstufe verlassende, auf den zweiten Druck gebrachte Gasgemisch über eine Leitung (46) in einen Bereich stromabwärts des NOx-Kompressors (17) geführt wird und anschließend der Absorptionsvorrichtung (25) zugeführt wird.

14. Anlage zur Herstellung von Salpetersäure, insbesondere nach einem Verfahren gemäß einem der Ansprüche 1 bis 13, umfassend einen Primärluftkompressor (14) mindestens einen in einem zum Primärluftkompressor (14) separaten Leitungsstrang (42) angeordneten Sekundärluftkompressor (40), einen auf der gleichen Welle wie der Primärluftkompressor (14) angeordneten NOx-Kompressor (17), einen Ammoniakoxidationsreaktor (11), eine Absorptionsvorrichtung (25) und eine Bleichvorrichtung (38), **dadurch gekennzeichnet, dass** stromabwärts zu dem Sekundärluftkompressor (40) mindestens ein weiterer Bleichluftkompressor (41) oder mindestens eine weitere Bleichluftkompressorstufe angeordnet ist, mittels dessen (derer) ein beladener Gasstrom aus der Bleichvorrichtung (38) auf den zweiten Druck gebracht wird, bei dem die Absorption des NOx-haltigen Gasstroms in Wasser stattfindet.

15. Anlage nach Anspruch 14, **dadurch gekennzeichnet, dass** der Sekundärluftkompressor (40) ausgangsseitig über wenigstens eine Leitung (42) mit einer Bleichvorrichtung (38) verbunden ist, die etwa bei dem gleichen Druck arbeitet, bei dem die Reaktion in dem Ammoniakoxidationsreaktor (11) stattfindet und von der Bleichvorrichtung (38) ausgangsseitig ausgehend wenigstens eine Leitung (45) zur Eingangsseite des weiteren Bleichluftkompressors (41) oder der weiteren Bleichluftkompressorstufe führt, wobei der weitere Bleichluftkompressor (41) bzw. die weitere Bleichluftkompressorstufe von dem NOx-Kompressor (17) verschieden ist.

16. Anlage nach einem der Ansprüche 14 oder 15, **dadurch gekennzeichnet, dass** eine von der Hochdruckseite des weiteren Bleichluftkompressors (41) oder der weiteren Bleichluftkompressorstufe ausgehende Leitung (46) vorgesehen ist, welche in eine Leitung (27) im Hochdruckbereich stromabwärts des NOx-Kompressors (17) mündet.

17. Anlage nach einem der Ansprüche 14 bis 16, **dadurch gekennzeichnet, dass** der Sekundärluftkompressor (40) und der weitere Bleichluftkompressor (41) als zwei getrennte Kompressoren ausgebildet sind, die über Getriebemittel (39) miteinander gekoppelt sind.

18. Anlage nach einem der Ansprüche 14 bis 17, **dadurch gekennzeichnet, dass** der Sekundärluftkompressor (40) als eine erste Kompressorstufe eines Kompressors mit mindestens zwei Kompressorstufen ausgebildet ist und die weitere Bleichluftkompressorstufe (41) als eine zweite Kompressorstufe des gleichen Kompressors ausgebildet ist, wobei beide Kompressorstufen über Getriebemittel (39) miteinander gekoppelt sind.

19. Anlage nach einem der Ansprüche 14 oder 18, **dadurch gekennzeichnet, dass** der Sekundärluftkompressor (40) und der weitere Bleichluftkompressor (41) oder die Sekundärluftkompressorstufe (40) und die weitere Bleichluftkompressorstufe (41) als Getriebe-Turboverdichter ausgebildet sind, wobei die jeweiligen Verdichterwellen der Kompressoren oder der Kompressorstufen über Getriebemittel miteinander gekoppelt sind.

20. Anlage nach einem der Ansprüche 14 bis 19, **dadurch gekennzeichnet, dass** der Primärluftkompressor (14) und der NOx-Kompressor (17) auf der gleichen Antriebswelle (19) angeordnet sind, während der Sekundärluftkompressor (40 oder die Sekundärluftkompressorstufe und der weitere Bleichluftkompressor (41) oder die weitere Bleichluftkompressorstufe in einem von der Antriebswelle (19) separaten Antriebsstrang angeordnet sind.

21. Anlage nach einem der Ansprüche 14 bis 20, **dadurch gekennzeichnet, dass** diese einen Hochdruck-Säurekondensator (28) umfasst, welcher stromabwärts des weiteren Bleichluftkompressors (41) oder der weiteren Bleichluftkompressorstufe angeordnet ist.

## Claims

1. A process for producing nitric acid by the Ostwald process comprising reaction of ammonia with atmospheric oxygen (primary air) to afford a NOx-containing gas stream in an ammonia oxidation reactor (11) at a first pressure and absorption of the NOx-containing gas stream in water in an absorption apparatus (25) at a second pressure which is higher than the first pressure, wherein the process comprises a step which provides for bleaching of the nitric acid with bleach air (secondary air), wherein the bleaching is carried out approximately at the pressure level of the first pressure, **characterized in that** the secondary air is brought to the operating pressure of the bleaching operation via at least one separate secondary air compressor (40) or a secondary air compressor stage, wherein this separate secondary air compressor (40) is independent of the compressor (14) which brings the primary air to the first pressure of the ammonia oxidation reaction, wherein downstream of the bleaching operation, the gas mixture formed in the bleaching operation is brought by means of a further bleach air compressor (41) or a further bleach air compressor stage to the second pressure at which the absorption of the NOx-containing gas stream in water is carried out, wherein this further bleach air compressor (41) or the bleach air compressor stage operates independently of a NOx compressor (17) which compresses the product gas mixture of the ammonia oxidation reactor (11) to the second pressure.

2. The process as claimed in claim 1, **characterized in that** the output stream of a low-pressure bleaching apparatus (38), which is brought to the second pressure in a further bleach air compressor (41) or a further bleach air compressor stage, at the entrance to the further bleach air compressor (41) or a further bleach air compressor stage comprises a residual content of NOx (NO + NO₂) of 0-5000, preferably 0-100 and particularly preferably 0-30 ppmv.

3. The process as claimed in claim 1 or 2, **characterized in that** the output stream of a low-pressure bleaching apparatus (38), which is brought to the second pressure in a further bleach air compressor (41) or a further bleach air compressor stage, is provided with a monitoring means therein for the residual content of NOx (NO + NO₂) and/or of water and/or for parameters dependent on these contents (such as for example dew points).

4. The process as claimed in any of claims 1 to 3, **characterized in that** the acid feed stream to a low-pressure bleaching apparatus (38) is provided with suitable measures therein for adhering to a preferred residual content of NOx (NO + NO₂).

5. The process as claimed in claim 4, **characterized in that** the measure for adhering to the preferred residual content of NOx (NO + NO₂) at the entrance to the further bleach air compressor (41) or a further bleach air compressor stage consists of an upstream bleaching tower (48) which is operated at the pressure level of the absorption apparatus (25) and is supplied on the gas side with the output stream of the further bleach air compressor (41) or a further bleach air compressor stage.

6. The process as claimed in any of claims 2 to 5, **characterized in that** the output stream of the low-pressure bleaching apparatus (38) is provided with suitable measures therein for adhering to the preferred residual content of NOx (NO + NO₂) at the entrance to the further bleach air compressor (41) or a further bleach air compressor stage.

7. The process as claimed in claim 6, **characterized in that** the measure in the output stream of the low pressure bleaching apparatus for adhering to the preferred residual content of NOx (NO + NO₂) at the entrance to the further bleach air compressor (41) or a further bleach air compressor stage consists of a catalytic measure for reduction of the NOx content, in particular a selective catalytic reduction of NOx with NH₃.

8. The process as claimed in claim 6 or 7, **characterized in that** the measure in the output stream of the low pressure bleaching apparatus (38) for adhering to the preferred residual content of NOx (NO + NO₂) at the entrance to the further bleach air compressor (41) or a further bleach air compressor stage consists of a dilution of the output stream of the low pressure bleaching apparatus (38) with additional air which is preferably provided from the first bleach air compressor (41) or from the first bleach air compressor stage.

9. The process as claimed in claim 1 to 8, **characterized in that** the further bleach air compressor (41) or the bleach air compressor stage is operatively connected to the secondary air compressor (40) or the secondary air compressor stage.

10. The process as claimed in claim 9, **characterized in that** the further bleach air compressor (41) or the bleach air compressor stage is coupled to the secondary air compressor (40) or the secondary air compressor stage via transmission means.

11. The process as claimed in any of claims 1 to 10, **characterized in that** the secondary air brought to the first pressure by means of the separate secondary air compressor (40) or the separate secondary air compressor stage is supplied to a bleaching apparatus (38) operating at the first pressure via a separate conduit (42).

12. The process as claimed in claim 11, **characterized in that** the gas mixture of NOx-laden bleach air exiting the bleaching apparatus (38) is supplied to the further bleach air compressor (41) or the bleach air compressor stage via a conduit (45).

13. The process as claimed in any of claims 1 to 12, **characterized in that** the gas mixture brought to the second pressure exiting the bleach air compressor (41) or the bleach air compressor stage is passed into a region downstream of the NOx compressor (17) via a conduit (46) and is subsequently supplied to the absorption apparatus (25).

14. A plant for producing nitric acid, in particular by a process as claimed in any of claims 1 to 13, comprising a primary air compressor (14), at least one secondary air compressor (40) arranged in a conduit tract (42) separate from the primary air compressor (14), a NOx compressor (17) arranged on the same shaft as the primary air compressor (14), an ammonia oxidation reactor (11), an absorption apparatus (25) and a bleaching apparatus (38), **characterized in that** at least one further bleach air compressor (41) or at least one further bleach air compressor stage, by means of which a laden gas stream from the bleaching apparatus (38) is brought to the second pressure at which the absorption of the NOx-containing gas stream in water is carried out, is arranged downstream of the secondary air compressor (40).

15. The plant as claimed in claim 14, **characterized in that** the exit of the secondary air compressor (40) is connected via at least one conduit (42) to a bleaching apparatus (38) which is operated at about the same pressure as the reaction in the ammonia oxidation reactor (11) and at least one conduit (45) connects the exit of the bleaching apparatus (38) to the entrance of the further bleach air compressor (41) or the further bleach air compressor stage, wherein the further bleach air compressor (41)/the further bleach air compressor stage is distinct from the NOx compressor (17).

16. The plant as claimed in claim 14 or 15, **characterized in that** a conduit (46) proceeding from the high-pressure side of the further bleach air compressor (41) or the further bleach air compressor stage is provided which opens into a conduit (27) in the high-pressure region downstream of the NOx compressor (17).

17. The plant as claimed in any of claims 14 to 16, **characterized in that** the secondary air compressor (40) and the further bleach air compressor (40) are configured as two separate compressors coupled to one another via transmission means (39).

18. The plant as claimed in any of claims 14 to 17, **characterized in that** the secondary air compressor (40) is in the form of a first compressor stage of a compressor having at least two compressor stages and the further bleach air compressor stage (41) is in the form of a second compressor stage of the same compressor, wherein the two compressor stages are coupled to one another via transmission means (39).

19. The plant as claimed in either of claims 14 or 18, **characterized in that** the secondary air compressor (40) and the further bleach air compressor (41) or the secondary air compressor stage (40) and the further bleach air compressor stage (41) are in the form of transmission turbo compressors, wherein the respective compressor shafts of the compressors or of the compressor stages are coupled to one another via transmission means.

20. The plant as claimed in any of claims 14 to 19, **characterized in that** the primary air compressor (14) and the NOx compressor (17) are arranged on the same drive shaft (19) while the secondary air compressor (40) or the secondary air compressor stage and the further bleach air compressor (41) or the further bleach air compressor stage are arranged in a drive train separate from the drive shaft (19).

21. The plant as claimed in any of claims 14 to 20, **characterized in that** it comprises a high-pressure acid condenser (28) which is arranged downstream of the further bleach air compressor (41) or the further bleach air compressor stage.

## Revendications

1. Procédé de production d'acide nitrique par le procédé d'Ostwald comprenant la réaction de l'ammoniac avec l'oxygène atmosphérique (air primaire) pour obtenir un flux gazeux contenant des NOx dans un réacteur d'oxydation de l'ammoniac (11) à une première pression et l'absorption du flux gazeux contenant des NOx dans l'eau dans un appareil d'absorption (25) à une seconde pression qui est supérieure à la première pression, dans lequel le procédé comprend une étape de blanchiment de l'acide nitrique avec de l'air de blanchiment (air secondaire), le blanchiment étant effectué approximativement au niveau de pression de la première pression, **caractérisé par le fait que** l'air secondaire est amené à la pression de fonctionnement de l'opération de blanchiment par l'intermédiaire d'au moins un compresseur d'air secondaire séparé (40) ou d'un étage de compresseur d'air secondaire, dans lequel ce compresseur d'air secondaire séparé (40) est indépendant du compresseur (14) qui amène l'air primaire à la première pression de la réaction d'oxydation de l'ammoniac, dans lequel, en aval de l'opération de blanchiment, le mélange gazeux formé dans l'opération de blanchiment est amené au moyen d'un autre compresseur d'air de blanchiment (41) ou d'un autre étage de compresseur d'air de blanchiment à la deuxième pression à laquelle l'absorption du flux gazeux contenant des NOx dans l'eau est effectuée, dans lequel ce compresseur d'air de blanchiment supplémentaire (41) ou l'étage de compression d'air de blanchiment fonctionne indépendamment d'un compresseur de NOx (17) qui comprime le mélange de gaz produit du réacteur d'oxydation de l'ammoniac (11) jusqu'à la deuxième pression.

2. le procédé selon la revendication 1, **caractérisé par le fait que** le flux de sortie d'un appareil de blanchiment à basse pression (38), qui est amené à la deuxième pression dans un autre compresseur d'air de blanchiment (41) ou un autre étage de compresseur d'air de blanchiment, à l'entrée de l'autre compresseur d'air de blanchiment (41) ou d'un autre étage de compresseur d'air de blanchiment, comprend une teneur résiduelle en NOx (NO + NO₂ ) de 0-5000, de préférence de 0-100 et de préférence encore de 0-30 ppmv.

3. le procédé selon la revendication 1 ou 2, **caractérisé par le fait que le** flux de sortie d'un appareil de blanchiment à basse pression (38), qui est amené à la deuxième pression dans un autre compresseur d'air de blanchiment (41) ou un autre étage de compresseur d'air de blanchiment, est doté d'un moyen de surveillance de la teneur résiduelle en NOx (NO + NO₂ ) et/ou en eau et/ou de paramètres dépendant de ces teneurs (tels que, par exemple, les points de rosée).

4. Procédé selon l'une des revendications 1 à 3, **caractérisé par le fait que** le flux d'alimentation en acide d'un appareil de blanchiment à basse pression (38) est pourvu de mesures appropriées pour respecter une teneur résiduelle préférée en NOx (NO + NO₂).

5. le procédé selon la revendication 4, **caractérisé en ce que** la mesure pour respecter la teneur résiduelle préférée en NOx (NO + NO₂ ) à l'entrée du compresseur d'air de blanchiment supplémentaire (41) ou d'un étage de compresseur d'air de blanchiment supplémentaire consiste en une tour de blanchiment en amont (48) qui fonctionne au niveau de pression de l'appareil d'absorption (25) et qui est alimentée côté gaz par le flux de sortie du compresseur d'air de blanchiment supplémentaire (41) ou d'un étage de compresseur d'air de blanchiment supplémentaire.

6. le procédé selon l'une des revendications 2 à 5, **caractérisé par le fait que le** flux de sortie de l'appareil de blanchiment à basse pression (38) est doté de mesures appropriées pour respecter la teneur résiduelle préférée en NOx (NO + NO₂ ) à l'entrée du compresseur d'air de blanchiment supplémentaire (41) ou d'un étage de compresseur d'air de blanchiment supplémentaire.

7. le procédé selon la revendication 6, **caractérisé en ce que la** mesure dans le flux de sortie de l'appareil de blanchiment à basse pression pour respecter la teneur résiduelle préférée en NOx (NO + NO₂ ) à l'entrée du compresseur d'air de blanchiment supplémentaire (41) ou d'un étage de compresseur d'air de blanchiment supplémentaire consiste en une mesure catalytique de réduction de la teneur en NOx, en particulier une réduction catalytique sélective des NOx avec NH₃.

8. le procédé selon la revendication 6 ou 7, **caractérisé en ce que** la mesure dans le flux de sortie de l'appareil de blanchiment à basse pression (38) pour respecter la teneur résiduelle préférée en NOx (NO + NO₂ ) à l'entrée du compresseur d'air de blanchiment supplémentaire (41) ou d'un étage de compresseur d'air de blanchiment supplémentaire consiste en une dilution du flux de sortie de l'appareil de blanchiment à basse pression (38) avec de l'air supplémentaire qui est de préférence fourni par le premier compresseur d'air de blanchiment (41) ou par l'étage de compresseur d'air de blanchiment supplémentaire.

9. le procédé selon les revendications 1 à 8, **caractérisé par le fait que** le compresseur d'air de blanchiment supplémentaire (41) ou l'étage de compression d'air de blanchiment est connecté de manière opérationnelle au compresseur d'air secondaire (40) ou à l'étage de compression d'air secondaire.

10. Procédé selon la revendication 9, **caractérisé par le fait que** le compresseur d'air de blanchiment supplémentaire (41) ou l'étage de compression d'air de blanchiment est couplé au compresseur d'air secondaire (40) ou à l'étage de compression d'air secondaire par l'intermédiaire de moyens de transmission.

11. Procédé selon l'une des revendications 1 à 10, **caractérisé par le fait que** l'air secondaire amené à la première pression au moyen du compresseur d'air secondaire séparé (40) ou de l'étage de compresseur d'air secondaire séparé est fourni à un appareil de blanchiment (38) fonctionnant à la première pression par l'intermédiaire d'un conduit séparé (42).

12. Procédé selon la revendication 11, **caractérisé par le fait que** le mélange gazeux d'air de blanchiment chargé de NOx sortant de l'appareil de blanchiment (38) est fourni au compresseur d'air de blanchiment supplémentaire (41) ou à l'étage du compresseur d'air de blanchiment par l'intermédiaire d'un conduit (45).

13. procédé selon l'une quelconque des revendications 1 à 12, **caractérisé par le fait que** le mélange gazeux amené à la deuxième pression à la sortie du compresseur d'air de blanchiment (41) ou de l'étage du compresseur d'air de blanchiment passe dans une région en aval du compresseur de NOx (17) par un conduit (46) et est ensuite fourni à l'appareil d'absorption (25).

14. Installation de production d'acide nitrique, notamment par un procédé selon l'une quelconque des revendications 1 à 13, comprenant un compresseur d'air primaire (14), au moins un compresseur d'air secondaire (40) disposé dans un conduit (42) séparé du compresseur d'air primaire (14), un compresseur de NOx (17) disposé sur le même arbre que le compresseur d'air primaire (14), un réacteur d'oxydation de l'ammoniac (11), un appareil d'absorption (25) et un appareil de blanchiment (38), un appareil d'absorption (25) et un appareil de blanchiment (38), **caractérisé en ce qu'au** moins un autre compresseur d'air de blanchiment (41) ou au moins un autre étage de compresseur d'air de blanchiment, au moyen duquel un flux de gaz chargé provenant de l'appareil de blanchiment (38) est amené à la seconde pression à laquelle l'absorption du flux de gaz contenant des NOx dans l'eau est effectuée, est disposé en aval du compresseur d'air secondaire (40).

15. L'installation selon la revendication 14, **caractérisée par le fait que** la sortie du compresseur d'air secondaire (40) est reliée par au moins un conduit (42) à un appareil de blanchiment (38) qui fonctionne à peu près à la même pression que la réaction dans le réacteur d'oxydation de l'ammoniac (11) et qu'au moins un conduit (45) relie la sortie de l'appareil de blanchiment (38) à l'entrée du compresseur d'air de blanchiment supplémentaire (41) ou à l'étage de compression d'air de blanchiment supplémentaire, dans lequel le compresseur d'air de blanchiment supplémentaire (41)/l'étage de compression d'air de blanchiment supplémentaire est distinct du compresseur de NOx (17).

16. l'installation selon la revendication 14 ou 15, **caractérisée par le fait qu'**un conduit (46) partant du côté haute pression du compresseur d'air de blanchiment supplémentaire (41) ou de l'étage du compresseur d'air de blanchiment supplémentaire est prévu et débouche dans un conduit (27) dans la zone haute pression en aval du compresseur de NOx (17).

17. L'installation selon l'une des revendications 14 à 16, **caractérisée par le fait que** le compresseur d'air secondaire (40) et le compresseur d'air de blanchiment supplémentaire (40) sont configurés comme deux compresseurs séparés couplés l'un à l'autre par l'intermédiaire de moyens de transmission (39).

18. L'installation selon l'une des revendications 14 à 17, **caractérisée par le fait que** le compresseur d'air secondaire (40) se présente sous la forme d'un premier étage de compresseur d'un compresseur ayant au moins deux étages de compresseur et que l'étage de compresseur d'air de javel (41) se présente sous la forme d'un deuxième étage de compresseur du même compresseur, les deux étages de compresseur étant couplés l'un à l'autre par l'intermédiaire de moyens de transmission (39).

19. l'installation selon l'une des revendications 14 ou 18, **caractérisée par le fait que** le compresseur d'air secondaire (40) et le compresseur d'air de javel supplémentaire (41) ou l'étage du compresseur d'air secondaire (40) et l'étage du compresseur d'air de javel supplémentaire (41) se présentent sous la forme de turbocompresseurs à transmission, dans lesquels les arbres respectifs des compresseurs ou des étages de compresseurs sont couplés l'un à l'autre par l'intermédiaire de moyens de transmission.

20. l'installation selon l'une des revendications 14 à 19, **caractérisée par le fait que le** compresseur d'air primaire (14) et le compresseur de NOx (17) sont disposés sur le même arbre d'entraînement (19), tandis que le compresseur d'air secondaire (40) ou l'étage du compresseur d'air secondaire et le compresseur d'air de blanchiment supplémentaire (41) ou l'étage du compresseur d'air de blanchiment supplémentaire sont disposés dans une chaîne d'entraînement séparée de l'arbre d'entraînement (19).

21. L'installation selon l'une des revendications 14 à 20, **caractérisée par le fait qu'**elle comprend un condenseur d'acide à haute pression (28) qui est disposé en aval du compresseur d'air de blanchiment supplémentaire (41) ou de l'étage du compresseur d'air de blanchiment supplémentaire.
